(19) Europäisches Patentamt
European Patent Office
Office européen des brevets

(11) **EP 4 303 895 A1**

(12) **EUROPEAN PATENT APPLICATION**

(43) Date of publication:
**10.01.2024 Bulletin 2024/02**

(21) Application number: **23183784.0**

(22) Date of filing: **06.07.2023**

(51) International Patent Classification (IPC):
**H01F 1/057** (2006.01)       **H01F 41/02** (2006.01)

(52) Cooperative Patent Classification (CPC):
**H01F 41/0293; H01F 1/0577**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.07.2022   CN 202210800318**

(71) Applicant: **Yantai Zhenghai Magnetic Material Co., Ltd.**
**Yantai Shandong 264006 (CN)**

(72) Inventors:
• **YU, Yongjiang**
  **Yantai, 264006 (CN)**

• **WANG, Cong**
  **Yantai, 264006 (CN)**
• **LI, Lei**
  **Yantai, 264006 (CN)**
• **JI, Fang**
  **Yantai, 264006 (CN)**
• **WEI, Rui**
  **Yantai, 264006 (CN)**

(74) Representative: **Gille Hrabal**
**Partnerschaftsgesellschaft mbB**
**Patentanwälte**
**Brucknerstraße 20**
**40593 Düsseldorf (DE)**

(54)   **RARE EARTH PERMANENT MAGNET, PREPARATION METHOD AND USE THEREOF**

(57)   The permanent magnet comprises a main phase structure of $R_2T_{14}B$ crystal grains, and R is a rare earth element; T comprises at least Mn, Fe, and optionally a transition metal comprising Co; B is boron; the permanent magnet further comprises Mn and heavy rare earth elements which are distributed in a grain boundary in a diffusion mode. The heavy rare earth element is selected from at least one selected from Dy, Ho and Tb. According to the rare earth permanent magnet prepared through the preparation method, more heavy rare earth elements can be diffused into the magnet core along the grain boundary, Hcj distribution of the permanent magnet is improved, and meanwhile the corrosion resistance and the mechanical property of the permanent magnet are improved.

EP 4 303 895 A1

**Description**

**TECHNICAL FIELD**

The present disclosure relates to the technical field of preparation of permanent magnet, and particularly to a rare earth permanent magnet, a preparation method and an use thereof.

**BACKGROUND**

Sintered neodymium-iron-boron magnets have excellent magnetic properties, so they can be widely used. Particularly in recent years, the comprehensive magnetic property of the neodymium-iron-boron magnet is further improved due to the popularization of a heavy rare earth diffusion technology, and the sum of the magnetic energy product (MGOe) and the coercivity (Hcj) has exceeded 80. However, the material cost of the heavy rare earth used in the diffusion technology is high, so that the reduction of the using amount of the diffused heavy rare earth has extremely important significance for reducing the production cost of the magnet. The research on improving the magnetic properties by adding a diffusion adjuvant (i.e., composite diffusion) instead of the conventional grain boundary diffusion method has been widely studied in the art, and many researchers have performed corresponding analyses on the types of elements of the added adjuvants. At present, the two types of elements mainly comprise: (1) adding elements with low melting points (for example, lower than 1100 °C), such as Cu, Ga, Al, Ag and the like, as auxiliary diffusion sources. Such elements generally have the functions of improving grain boundary infiltration and improving Hcj in the conventional sintered NdFeB magnet, and when the elements are added as diffusion source auxiliary elements, the melting point of the diffusion sources is reduced, and in this case, if the diffusion is performed at the conventional heavy rare earth diffusion temperature, the heavy rare earth diffusion sources are rapidly melted at a lower temperature, the crystal grains on the surface of the magnet and the diffusion sources are in transition fusion, the diffusion source elements excessively permeate into crystal grains on the surface of the magnet, and the consumption of the diffusion source elements is increased, so that the Hcj difference between the diffusion magnet surface and the magnet core is increased. However, although the consumption of the diffusion sources is reduced by reducing the diffusion temperature, the migration speed of the heavy rare earth element in the grain boundary phase is reduced with the reduction of the diffusion temperature, so that the diffusible depth is greatly reduced, and it is difficult to prepare a diffusion magnet with a large thickness, and thus it is difficult to obtain practical beneficial effects in practical applications. (2) adding elements with high melting points (for example, higher than 1600 °C), such as Zr, Ti, Nb, W and the like, as auxiliary diffusion sources. After the addition of such elements, the melting point of the diffusion sources is increased, and the heavy rare earth diffusion sources are more difficult to rapidly permeate into the magnet. The liquid phase ratio of the magnet at high temperature is increased when the diffusion temperature is increased, and the reaction of the diffusion sources with the crystal grains on the surface of the magnet is accelerated. Therefore, it has become a technical problem to be solved urgently to select a proper diffusion source with the addition of elements and diffusion temperature process, such that the reaction of the diffusion source with the crystal grains on the surface of the magnet is reduced, more diffusion sources permeate into the magnet, the Hcj difference between the magnet surface and the core is reduced, and the improvement of the utilization rate and the diffusion depth of the heavy rare earth is achieved.

**SUMMARY**

In order to solve the above problems, the present disclosure provides the following technical schemes:

a rare earth permanent magnet, comprising a main phase structure of $R_2T_{14}B$ crystal grain, wherein
R is a rare earth element;
T comprises at least Mn, Fe, and optionally a transition metal comprising Co;
B is boron;
the permanent magnet further comprises Mn and a heavy rare earth element diffused and distributed in a grain boundary;
the heavy rare earth element is at least one selected from Dy, Ho, and Tb.

According to an embodiment of the present disclosure, R is selected from Nd, and optionally comprises or does not comprise at least one selected from Pr, Dy, Tb, Ho, Ce, and Gd.

According to an embodiment of the present disclosure, the permanent magnet further comprises M. Preferably, M is at least one selected from aluminum (Al), titanium (Ti), copper (Cu), gallium (Ga), zirconium (Zr), and niobium (Nb).

According to an embodiment of the present disclosure, the contents of R, T, B, and M in the permanent magnet are not specifically defined, and can be selected from those known in the art. For example,, the weight percentage of

M is $0 \leq M \leq 5\%$.

According to an embodiment of the present disclosure, Mn has a content of x1 at the surface of the permanent magnet, the heavy rare earth has a content of y1 at the surface, Mn has a content of x2 at 500 μm away from the surface, and the heavy rare earth has a content of y2 at 500 μm away from the surface, wherein x1 > x2 and y1 > y2. In the present disclosure, the content of Mn refers to the total mass of Mn in the main phase structure and the grain boundary. In the present disclosure, the content of Mn at the surface of the permanent magnet refers to the content of Mn close to the surface of the permanent magnet, for example, the content of Mn within 10 μm of the surface of the permanent magnet.

According to an embodiment of the present disclosure, the surface of the permanent magnet has a coercivity of z1, and the core of the permanent magnet has a coercivity of z2, wherein z1 > z2. In the present disclosure, the coercivity at the surface of the permanent magnet refers to a coercivity close to the surface of the permanent magnet, for example, a coercivity within 1 mm of the surface of the permanent magnet. In the present disclosure, the core of the permanent magnet refers to the geometric center of the permanent magnet.

According to an embodiment of the present disclosure, the permanent magnet has a thickness of m. In the present disclosure, the thickness of the permanent magnet refers to a length value of the permanent magnet along any diffusion direction, for example, it can be a length value in an orientation direction, a length value in a length direction, or a length value in a width direction of the permanent magnet.

Preferably, the permanent magnet has a thickness of m ≤ 15 mm, such as 1 mm, 2 mm, 3 mm, 4 mm, 5 mm, 6 mm, 7 mm, 8 mm, 9 mm, 10 mm, 11 mm, 12 mm, 13 mm, 14 mm, or 15 mm. According to an embodiment of the present disclosure, the permanent magnet satisfies the following formulas (1) and (2):

$$x1 \,/\, x2 \geq y1 \,/\, y2 \qquad\qquad (1)$$

$$[2 * x1 \,/\, x2 - (z1 - z2) \,/\, 2 \,/\, m] \geq 0 \qquad (2)$$

The inventors found that when the formulas (1) and (2) described above are not satisfied, the Hcj difference z1 - z2 between the surface layer and the core of the permanent magnet is too large.

According to an embodiment of the present disclosure, the rare earth permanent magnet has an oxygen content below 2000 ppm. In the present disclosure, the oxygen content of the rare earth permanent magnet is controlled below 2000 ppm by using a low-oxygen process, so that the formation of R oxides (such as neodymium oxide) in the grain boundary and the triple phase point of the grain boundary can be effectively reduced, the infiltration of the grain boundary of the permanent magnet can be improved, and the continuity of the grain boundary can be improved, thereby improving the diffusion depth of the heavy rare earth elements in the permanent magnet and improving the coercivity of the permanent magnet.

According to an embodiment of the present disclosure, the permanent magnet is obtained by arranging a diffusion source on a surface of a matrix of the neodymium-iron-boron magnet and then performing diffusion heat treatment.

Preferably, the matrix of the neodymium-iron-boron magnet has an oxygen content below 2000 ppm. The inventors found that when the oxygen content of the matrix of the neodymium-iron-boron magnet is too high, the effect of the diffusion heat treatment is poor.

Preferably, the diffusion source comprises at least Mn and a heavy rare earth, wherein Mn has a content of no more than 20 wt%, preferably 0.1-20 wt%, such as 0.1 wt%, 0.5 wt%, 1 wt%, 5 wt%, 10 wt%, 15 wt%, or 20 wt%. The inventors found that when the content of Mn in the diffusion source exceeds 20 wt%, excessive Mn may cause a decrease in the concentration of heavy rare earth in the diffusion source to affect diffusion efficiency; when the content of Mn is too low, the content of heavy rare earth in a local area of the matrix of the neodymium-iron-boron magnet is too high and the reaction of the heavy rare earth with crystal grains on the surface of the matrix is accelerated, thereby reducing the effective diffusion depth and increasing the coercivity difference between the interior and the surface of the magnet.

According to an embodiment of the present disclosure, the diffusion heat treatment comprises at least a two-stage heat treatment.

Preferably, the heat treatment comprises a first-stage heat treatment followed by a second-stage heat treatment.

Further, the first-stage heat treatment is performed under conditions comprising: a temperature of 800-1000 °C, such as 850-950 °C, and, for example, 900 °C for at least 3 h, such as 3-30 h, and preferably 3-35 h.

Further, the second-stage heat treatment is performed under conditions comprising: a temperature of 400-650 °C, such as 450-600 °C, and, for example, 400 °C, 500 °C, or 600 °C for 1-15 h, such as 2-8 h, and, for example, 3 h, 5 h, or 7 h.

According to an embodiment of the present disclosure, the matrix of the neodymium-iron-boron magnet can be further subjected to blackening treatment before arranging the diffusion source. Further, the blackening treatment conditions are as follows: in the atmosphere, the magnet is blackened at a temperature of 200-500 °C for 3-60 min.

According to an exemplary embodiment of the present disclosure, the permanent magnet is obtained by blackening the matrix of the neodymium-iron-boron magnet, arranging a diffusion source on the surface of the blackened matrix, and then performing heat treatment.

The present disclosure further provides a preparation method of the rare earth permanent magnet described above, comprising the following steps:

(1) preparing a matrix of a neodymium-iron-boron magnet;
(2) preparing a diffusion source comprising at least Mn and a substance comprising a heavy rare earth element; and
(3) arranging the diffusion source in step (2) on a surface of the matrix, and performing diffusion heat treatment to obtain the rare earth permanent magnet.

According to an embodiment of the present disclosure, in step (1), the matrix of the neodymium-iron-boron diffusion magnet can be selected from matrixes known in the art, for example, matrixes prepared from raw materials known in the art.

Preferably, the raw materials of the matrix comprise R, Fe, and B, and optionally comprise or do not comprise Co and/or M, wherein R and M have the meanings as described above. As an example, the raw materials of the matrix comprise the following: 27% of PrNd, 4% of Dy, 2% of Co, 0.1% of Cu, 0.1% of Ga, 0.4% of Al, 0.1% of Zr, and 1% of B, with the balance being Fe. According to an embodiment of the present disclosure, the matrix has an oxygen content below 2000 ppm.

According to an embodiment of the present disclosure, in step (1), the method for preparing the matrix of the neodymium-iron-boron magnet comprises: smelting, milling, pressing, and sintering. In the present disclosure, the smelting, milling, pressing, and sintering can be performed by methods known in the art, as long as the matrix can be obtained.

As an example, the method for preparing the matrix of the neodymium-iron-boron magnet comprises: smelting raw materials of the neodymium-iron-boron magnet, and obtaining alloy slices by using a rapid hardening and strip casting method; performing a hydrogen absorption treatment on the alloy slices (e.g., with a hydrogen absorption pressure of 0.2 MPa), and performing air flow milling to obtain an alloy powder (e.g., SMD = 2.8 $\mu$m); and performing oriented-pressing on the alloy powder in a magnetic field at a controlled intensity of the orientation field of 2 T, then performing isostatic pressing at 170 MPa to obtain a compact, and performing vacuum sintering on the compact (e.g., at a temperature of 1065 °C) to obtain the matrix.

According to an embodiment of the present disclosure, in step (1), the matrix can be further subjected to blackening treatment. Further, the blackening treatment conditions are as follows: in the atmosphere, the blackening treatment is performed at a temperature of 200-500 °C for 3-60 min. According to an embodiment of the present disclosure, in step (2), Mn has a content of 0.01% to 20%, preferably 0.1% to 20%, such as 5%, 10%, or 15%, in the diffusion source.

According to an embodiment of the present disclosure, in step (2), the substance comprising the heavy rare earth element is selected from pure metals of heavy rare earths and/or compounds of heavy rare earth metals, preferably pure metals of heavy rare earths, in the diffusion source. Preferably, the compound of the heavy rare earth metal is at least one selected from a fluoride of the heavy rare earth, an oxide of the heavy rare earth, a hydride of the heavy rare earth, and an oxyfluoride of the heavy rare earth.

According to an embodiment of the present disclosure, the present disclosure would not specifically define the method for preparing for the diffusion source in step (2), as long as the diffusion source can be obtained. As an example, the method for preparing the diffusion source comprises: respectively preparing a diffusion source comprising Mn and a diffusion source comprising a heavy rare earth element, and homogeneously mixing the two to obtain the diffusion source. As an example, the method for preparing the diffusion source comprises: melting an alloy comprising Mn and a heavy rare earth element, and ingot casting to obtain the diffusion source.

According to an embodiment of the present disclosure, in step (3), the diffusion source may be arranged to the surface of the matrix by using a method that is known in the art, such as at least one selected from thermal spraying, evaporation, coating, magnetron sputtering, burying, printing, and the like. As an example, the method for arranging the diffusion source comprises: arranging a powder comprising a heavy rare earth and Mn on the surface of the matrix of the magnet by coating. As an example, the method for arranging the diffusion source comprises: arranging an alloy comprising a heavy rare earth and Mn on the surface of the matrix of the magnet by magnetron sputtering.

According to an embodiment of the present disclosure, in step (3), the diffusion heat treatment is performed under vacuum or an inert gas atmosphere.

According to an embodiment of the present disclosure, in step (3), the diffusion heat treatment can be performed by using a method known in the art.

According to an embodiment of the present disclosure, in step (3), the diffusion heat treatment comprises at least a two-stage heat treatment.

Preferably, the diffusion heat treatment comprises a first-stage heat treatment followed by a second-stage heat treatment.

Further, the first-stage heat treatment is performed under conditions comprising: a temperature of 800-1000 °C, such as 850-950 °C, and, for example, 900 °C for at least 3 h, such as 3-30 h, and preferably 3-35 h.

Further, the second-stage heat treatment is performed under conditions comprising: a temperature of 400-650 °C, such as 450-600 °C, and, for example, 400 °C, 500 °C, or 600 °C for 1-10 h, such as 2-8 h, and, for example, 3 h, 5 h, or 7 h.

According to an exemplary embodiment of the present disclosure, the preparation method comprises:

(1') preparing a matrix of a neodymium-iron-boron magnet, and blackening the matrix;

(2') preparing a diffusion source comprising at least Mn and a substance comprising a heavy rare earth element, and optionally comprising or not comprising M; and

(3') arranging the diffusion source in step (2') on the surface of the blackened matrix in step (1'), and performing diffusion heat treatment to obtain the rare earth permanent magnet.

The inventors have conducted extensive studies to solve the problems described above, and the results show that when the rare earth permanent magnet prepared by the preparation method described above, especially after performing diffusion source arrangement and diffusion heat treatment on the matrix of the permanent neodymium-iron-boron magnet, heavy rare earth elements are diffused from the surface of the matrix of the permanent neodymium-iron-boron magnet into the interior of the matrix of the permanent neodymium-iron-boron magnet, so as to obtain a rare earth permanent magnet satisfying the formulas (1) and (2) described above. Thus, the enrichment phenomenon of heavy rare earths on the surface is greatly reduced, and more heavy rare earths are uniformly diffused into the interior of the magnet, thereby increasing the coercivity of the diffusion magnet and reducing the coercivity difference between the surface and the core of the permanent magnet. The reaction degree of the diffusion source with the main phase crystal grains on the surface of the matrix of the neodymium-iron-boron magnet is reduced during the diffusion, that is, under the same condition, more heavy rare earth elements are diffused into the interior of the matrix of the neodymium-iron-boron magnet along the grain boundary instead of reacting with the crystal grains on the surface of the matrix, so that the utilization rate of the heavy rare earth during the diffusion is significantly improved, and the enrichment condition of the heavy rare earths on the surface of the permanent magnet obtained after diffusion is reduced, thereby reducing the Hcj difference between the surface and the core of the rare earth permanent magnet of the present disclosure.

The inventors found that too low diffusion temperature during the diffusion heat treatment can cause the diffusion speed of the diffusion source in the matrix of the neodymium-iron-boron magnet to be reduced, thereby affecting the diffusion efficiency; while too high diffusion temperature during the diffusion heat treatment can cause the formation of excessive liquid phase of the crystal grains at the high temperature, the reaction of the liquid phase with the diffusion source is accelerated, and the heavy rare earth diffusion source cannot be sufficiently diffused into the core of the matrix of the neodymium-iron-boron magnet, so that the coercivity difference between the interior and the surface of the permanent magnet is increased, and the use of the permanent magnet in a motor is influenced.

It is known in the art that the diffusion process of the neodymium-iron-boron magnet comprises melting of the diffusion source, the reaction of the diffusion source with the crystal grains and grain boundaries of the magnet, and diffusion of the diffusion source into the interior of the matrix of the neodymium-iron-boron magnet along the grain boundaries. The inventors found through experiments that: Mn can be added into the heavy rare earth diffusion source because the melting point of Mn is 1244 °C and is relatively close to that of the heavy rare earth (for example, the melting point of Tb is 1172 °C and the melting point of Dy is 1412 °C). Moreover, when the content of Mn in the diffusion source is 0-20 wt%, the melting point of the composite diffusion source is still close to that of the original heavy rare earth, under this condition, the diffusion temperature of the composite diffusion source can be close to that of the heavy rare earth diffusion source, so that the problems of the transition melting of the grain boundary phase caused by too high diffusion temperature or the reduction of the diffusion speed of the heavy rare earth element caused by too low diffusion temperature do not exist. In addition, during the diffusion, the introduction of Mn into the diffusion source would relatively reduced the content of the heavy rare earth at a diffusion interface of the magnet, and thus avoid the quick reaction of the heavy rare earth generated by supersaturation and diffusion on the surface of the matrix of the neodymium-iron-boron magnet with main phase crystal grains in a short time and even a reverse core-shell structure generates from such reaction. Said reaction and reverse core-shell structure may lead to a great consumption of the heavy rare earth in the diffusion source on the surface of the matrix of the neodymium-iron-boron magnet, so that the heavy rare earth cannot be successfully and effectively diffused into the interior of the magnet. Moreover, as should be noted, those skilled in the art should understand that the diffusion temperature refers to the temperature at the time of the diffusion heat treatment.

The inventors further found that the reaction of the crystal grains on the surface of the matrix of the neodymium-iron-boron magnet with the diffusion source is further slowed down through blackening treatment, more diffusion sources can enter the core of the matrix of the neodymium-iron-boron magnet, and the coercivity difference between the surface and the core of the permanent magnet is reduced. The inventors found that when the blackening temperature is too high or the blackening time is too long, the crystal grains on the surface of the matrix of the neodymium-iron-boron magnet are excessively oxidized, and the remanence of the matrix of the neodymium-iron-boron magnet can be reduced. However, when the blackening temperature is too low or the blackening time is too short, the crystal grains on the surface of the matrix of the neodymium-iron-boron magnet are not fully oxidized, and part of the crystal grains can still rapidly react with the diffusion source.

In addition, the present disclosure not only improves the heavy rare earth distribution and Hcj distribution of the permanent magnet, but also has a certain effect on the corrosion resistance and mechanical properties of the permanent magnet by arranging the diffusion source on the surface of the matrix of the neodymium-iron-boron magnet and performing diffusion heat treatment. This is mainly because when the diffusion source of the present disclosure is used for diffusion, the heavy rare earth can be more uniformly distributed in the magnet, particularly on the surface and in the core region of the magnet, so that the composition and the organizational structure consistency of the magnet are improved along the diffusion direction.

The present disclosure further provides a rare earth permanent magnet prepared by the preparation method described above.

The present disclosure further provides use of the rare earth permanent magnet described above, preferably for a motor.

### Advantageous Effects

The rare earth permanent magnet prepared by the preparation method in the present disclosure enables more heavy rare earth elements to be diffused into the core of the magnet along the grain boundary, can improve the Hcj distribution of the permanent magnet, and can improve the corrosion resistance and mechanical properties of the permanent magnet at the same time.

### DETAILED DESCRIPTION

The technical solutions of the present disclosure will be further illustrated in detail with reference to the following specific examples. It will be understood that the following examples are merely exemplary illustrations and explanations of the present disclosure, and should not be construed as limiting the protection scope of the present disclosure. All techniques implemented based on the content of the present disclosure described above are included within the protection scope of the present disclosure.

Unless otherwise stated, the raw materials and reagents used in the following examples are all commercially available products or can be prepared using known methods.

In the following examples, the following tests were performed by taking magnets at different positions of the diffusion-treated magnet as samples to be tested.

1. Magnetic property test: 1 mm-1 mm-1 mm standard sample blocks were processed on the surface layer and the geometric center of the diffused magnet respectively, and the magnetic property test was performed on a pulsed magnetic field measuring instrument (PFM).

2. Composition test: the diffused magnet was divided into two parts in the diffusion direction, and the contents of Mn and the heavy rare earth at the surface and the center of the permanent magnet were measured, respectively, by using an X-ray fluorescence spectrometer (XRF), wherein the Mn content at the surface of the permanent magnet was denoted as $x1$, the heavy rare earth content at the surface was denoted as $y1$, the Mn content at 500 $\mu$m from the surface of the permanent magnet to the interior of the magnet was denoted as $x2$, and the heavy rare earth content was denoted as $y2$.

3. Impact absorbing energy test: the diffused samples (about 55 mm-10 mm-6 mm in size) were tested for impact absorbing energy on an impact tester 5 times, and an average value was taken.

Example 1

The preparation method of a rare earth permanent magnet was as follows.

(1) Preparation of matrix of sintered neodymium-iron-boron magnet:

Raw materials of sintered neodymium-iron-boron permanent magnets by weight percentage were comprised: 27% of PrNd, 4% of Dy, 2% of Co, 0.1% of Cu, 0.1% of Ga, 0.4% of Al, 0.1% of Zr, and 1% of B, with the balance being Fe. Alloy slices were prepared by using the raw materials described above through a rapid hardening and strip casting method.

The obtained rapid hardened slices described above were subjected to a hydrogen absorption treatment at a hydrogen absorption pressure of 0.2 MPa, followed by air flow milling to obtain a powder with an SMD of 2.8 $\mu$m. An antioxidant fatty acid ester accounting for 0.05 wt% of the total amount of the raw materials was added and mixed homogeneously to obtain a fine alloy powder. The fine alloy powder described above was subjected to oriented-pressing in a magnetic field at a controlled intensity of the orientation field of 2 T, and then subjected to isostatic pressing at 170 MPa to obtain a compact. The compact was subject to a vacuum heat treatment furnace for sintering at a controlled sintering temperature of 1065 °C.

The sintered compact was machined into a matrix with a size of 55 mm × 10 mm × 6 mm, in which the dimension along the orientation direction was 6 mm, and the oxygen content of the matrix was below 2000 ppm.

(2) Preparation of diffusion source:
Tb powder and Mn powder were mixed in a ratio of 95% to 5% by weight percentage, and then 1% of 4-hexylresorcinol antioxidant and 5% of ethanol were added to be mixed into a slurry.
(3) Arrangement of diffusion source and diffusion heat treatment:
The matrix in step (1) was blackened in air at a temperature of 300 °C for 40 min.

The slurry in step (2) was coated on the surface of the matrix and the diffusion heat treatment was performed. In the diffusion heat treatment process, the first-stage heat treatment was performed at a diffusion temperature of 940 °C for 30 h, followed by the second-stage heat treatment at 500 °C for 10 h to obtain the rare earth permanent magnet in this example.

The magnetic properties and mechanical properties of the rare earth permanent magnet in this example were measured by the test methods described above.

Example 2

The preparation method of a rare earth permanent magnet was as follows.

(1) Preparation of matrix of sintered neodymium-iron-boron magnet:
Raw materials of sintered neodymium-iron-boron permanent magnets by weight percentage comprise: 27% of PrNd, 4% of Dy, 2% of Co, 0.1% of Cu, 0.1% of Ga, 0.4% of Al, 0.1% of Zr, and 1% of B, with the balance being Fe. Alloy slices were prepared by using the raw materials described above through a rapid hardening and strip casting method.

The obtained rapid hardened slices described above were subjected to a hydrogen absorption treatment at a hydrogen absorption pressure of 0.2 MPa, followed by air flow milling to obtain a powder with an SMD of 2.8 $\mu$m. An antioxidant fatty acid ester accounting for 0.05 wt% of the total amount of the raw materials was added and mixed homogeneously to obtain a fine alloy powder. The fine alloy powder described above was subjected to oriented-pressing in a magnetic field at a controlled intensity of the orientation field of 2 T, and then subjected to isostatic pressing at 170 MPa to obtain a compact. The compact described above was placed in a vacuum heat treatment furnace for sintering at a controlled sintering temperature of 1065 °C.

The sintered compact was machined into a matrix with a size of 55 mm × 10 mm × 6 mm, in which the dimension along the orientation direction was 6 mm.

(2) Preparation of diffusion source:
Tb powder and Mn powder were mixed in a ratio of 85% to 15% by weight percentage, and then 1% of 4-hexylresorcinol antioxidant and 5% of ethanol were added to be mixed into a slurry.
(3) Arrangement of diffusion source and diffusion heat treatment:
The matrix in step (1) was blackened in air at a temperature of 300 °C for 40 min in the atmosphere. The slurry in step (2) was coated on the surface of the matrix and the diffusion heat treatment was performed. In the diffusion heat treatment process, the first-stage heat treatment was performed at a diffusion temperature of 940 °C for 30 h, followed by the second-stage heat treatment at 500 °C for 10 h to obtain the rare earth permanent magnet in this example.

The magnetic properties and mechanical properties of the permanent magnet in this example were measured by the test methods described above.

Example 3

The preparation method of a rare earth permanent magnet was as follows.

(1) Preparation of matrix of sintered neodymium-iron-boron magnet:
Raw materials of sintered neodymium-iron-boron permanent magnets by weight percentage comprise: 27% of PrNd, 4% of Dy, 2% of Co, 0.1% of Cu, 0.1% of Ga, 0.4% of Al, 0.1% of Zr, and 1% of B, with the balance being Fe. Alloy slices were prepared by using the raw materials described above through a rapid hardening and strip casting method.

The obtained rapid hardened slices described above were subjected to a hydrogen absorption treatment at a hydrogen absorption pressure of 0.2 MPa, followed by air flow milling to obtain a powder with an SMD of 2.8 $\mu$m. An antioxidant fatty acid ester accounting for 0.05 wt% of the total amount of the raw materials was added and mixed homogeneously to obtain a fine alloy powder. The fine alloy powder described above was subjected to oriented-pressing in a magnetic field at a controlled intensity of the orientation field of 2 T, and then subjected to isostatic pressing at 170 MPa to obtain a compact. The compact described above was subject to a vacuum heat treatment furnace for sintering at a controlled sintering temperature of 1065 °C.
The sintered compact was machined into a matrix with a size of 55 mm × 10 mm × 6 mm, in which the dimension along the orientation direction was 6 mm.

(2) Preparation of diffusion source: Tb and Mn were mixed in a ratio of 85% to 15% by weight percentage and then melted to prepare a diffusion source powder. 1% of 4-hexylresorcinol antioxidant and 5% of ethanol were added to be mixed into a slurry.
(3) Arrangement of diffusion source and diffusion heat treatment:

The matrix in step (1) was blackened in air at a temperature of 300 °C for 40 min.
The slurry in step (2) was coated on the surface of the matrix and the diffusion heat treatment was performed. In the diffusion heat treatment process, the first-stage heat treatment was performed at a diffusion temperature of 940 °C for 30 h, followed by the second-stage heat treatment at 500 °C for 10 h to obtain the rare earth permanent magnet in this example.

The magnetic properties and mechanical properties of the permanent magnet in this example were measured by the test methods described above.

Example 4

The preparation method of a rare earth permanent magnet was as follows.

(1) Preparation of matrix of sintered neodymium-iron-boron magnet:
Raw materials of sintered neodymium-iron-boron permanent magnets by weight percentage comprise: 27% of PrNd, 4% of Dy, 2% of Co, 0.1% of Cu, 0.1% of Ga, 0.4% of Al, 0.1% of Zr, and 1% of B, with the balance being Fe. Alloy slices were prepared by using the raw materials described above through a rapid hardening and strip casting method.

The obtained rapid hardened slices described above were subjected to a hydrogen absorption treatment at a hydrogen absorption pressure of 0.2 MPa, followed by air flow milling to obtain a powder with an SMD of 2.8 $\mu$m. An antioxidant fatty acid ester accounting for 0.05 wt% of the total amount of the raw materials was added and mixed homogeneously to obtain a fine alloy powder. The fine alloy powder described above was subjected to oriented-pressing in a magnetic field at a controlled intensity of the orientation field of 2 T, and then subjected to isostatic pressing at 170 MPa to obtain a compact. The compact described above was subject to a vacuum heat treatment furnace for sintering at a controlled sintering temperature of 1065 °C.
The sintered compact was machined into a matrix with a size of 55 mm × 10 mm × 6 mm, in which the dimension along the orientation direction was 6 mm.

(2) Preparation of diffusion source:
Terbium fluoride and Mn were mixed in a ratio of 95% to 5% by weight percentage and then melted to prepare a diffusion source powder. 1% of 4-hexylresorcinol antioxidant and 5% of ethanol were added to be mixed into a slurry.
(3) Arrangement of diffusion source and diffusion heat treatment:

The matrix in step (1) was blackened in air at a temperature of 300 °C for 40 min.

The slurry in step (2) was coated on the surface of the matrix and the diffusion heat treatment was performed. In the diffusion heat treatment process, the first-stage heat treatment was performed at a diffusion temperature of 940 °C for 30 h, followed by the second-stage heat treatment at 500 °C for 10 h to obtain the rare earth permanent magnet in this example.

The magnetic properties and mechanical properties of the magnet in this example were measured by the test methods described above.

Example 5

The preparation method in this example was substantially the same as that in Example 1, except that the acid cleaning treatment was used instead of the blackening treatment before the arrangement of the diffusion source.

Comparative Example 1

The preparation method in this comparative example was substantially the same as that in Example 1, except that, in step (2), the diffusion source was 100% Tb.

Comparative Example 2

The preparation method in this comparative example was substantially the same as that in Example 1, except that, in step (2), the diffusion source comprises 95% Tb and 5% Al.

Comparative Example 3

The preparation method in this comparative example was substantially the same as that in Example 1, except that, in step (2), the diffusion source comprises 95% Tb and 5% Ti.

Comparative Example 4

The preparation method in this comparative example was substantially the same as that in Example 1, except that, in step (2), the diffusion source comprises 75% Tb and 25% Mn.

Comparative Example 5

The preparation method in this comparative example was substantially the same as that in Example 1, except that, in step (2), the diffusion source comprises 95% terbium fluoride and 5% Al.

Comparative Example 6

The preparation method in this comparative example was substantially the same as that in Example 1, except that, in step (2), the diffusion source comprises 90% terbium fluoride, 5% Mn, and 5% Al.

Comparative Example 7

The preparation method in this comparative example was substantially the same as that in Example 1, except that, in step (1), the raw materials of sintered neodymium-iron-boron permanent magnets comprise: 27% of PrNd, 4% of Dy, 2% of Co, 0.1% of Cu, 0.1% of Ga, 0.4% of Al, 0.1% of Zr, 1% of B, and 0.2% of Mn, with the balance being Fe.

Table 1 is a summary of Mn and Tb element distributions at different positions of the permanent magnets in the examples and the comparative examples described above, comprising Mn and Tb contents at the surface and at 500 $\mu$m away from the surface, and whether formula (1) is satisfied or not.

Table 1. Summary of Mn and Tb element distributions at different positions of permanent magnet

| | Diffusion source | Pretreatment | x1 (wt%) | x2 (wt%) | y1 (wt%) | y2 (wt%) | x1/x2 | y1/y2 | Whether formula 1 is satisfied |
|---|---|---|---|---|---|---|---|---|---|
| Example 1 | 95%Tb+5%Mn | Blackening | 0.09 | 0.02 | 1.35 | 0.38 | 4.5 | 3.55 | Yes |
| Example 2 | 85%Tb+15%Mn | Blackening | 0.12 | 0.03 | 1.44 | 0.39 | 4.0 | 2.85 | Yes |
| Example 3 | 85%Tb+15%Mn | Blackening | 0.13 | 0.02 | 1.65 | 0.46 | 6.5 | 2.50 | Yes |
| Example 4 | 95%TbF+5%Mn | Blackening | 0.12 | 0.02 | 1.71 | 0.33 | 6.0 | 5.18 | Yes |
| Example 5 | 95%Tb+5%Mn | Acid cleaning | 0.13 | 0.02 | 1.96 | 0.37 | 6.5 | 5.30 | Yes |
| Comparative Example 1 | 100%Tb | Blackening | 0.01 | 0.01 | 2.14 | 0.31 | 1 | 10.13 | No |
| Comparative Example 2 | 95%Tb+5%Al | Blackening | 0.01 | 0.01 | 3.05 | 0.28 | 1 | 14.46 | No |
| Comparative Example 3 | 95%Tb+5%Ti | Blackening | 0.02 | 0.01 | 2.53 | 0.33 | 2.0 | 16.76 | No |
| Comparative Example 4 | 75%Tb+25%Mn | Blackening | 0.15 | 0.03 | 3.62 | 0.31 | 5.0 | 11.68 | No |
| Comparative Example 5 | 95%TbF+5%Al | Blackening | 0.01 | 0.01 | 3.96 | 0.44 | 1.0 | 9.00 | No |
| Comparative Example 6 | 90%TbF+5%Mn+5%Al | Blackening | 0.1 | 0.02 | 1.99 | 0.36 | 5.0 | 5.53 | No |
| Comparative Example 7 | 100%Tb | Blackening | 0.22 | 0.21 | 3.44 | 0.41 | 1.0 | 8.39 | No |

Table 2 is a summary of the coercivity of the surface, the coercivity of the core, and the magnetic properties of the surface and the core of the permanent magnets in the examples and comparative examples described above, comprising the coercivity difference, the impact absorbing energy of the magnet, and the like.

Table 2. Summary of magnetic properties

| | z1 (kA/m) | z2 (kA/m) | z1-z2 (kA/m) | Impact absorbing energy (J) | Whether formula 2 is satisfied |
|---|---|---|---|---|---|
| Example 1 | 2701 | 2610 | 91 | 2.49 | Yes |
| Example 2 | 2723 | 2627 | 96 | 2.44 | Yes |
| Example 3 | 2715 | 2610 | 105 | 2.41 | Yes |
| Example 4 | 2711 | 2593 | 118 | 2.40 | Yes |
| Example 5 | 2733 | 2590 | 143 | 2.35 | Yes |
| Comparative Example 1 | 2723 | 2547 | 176 | 2.15 | No |
| Comparative Example 2 | 2712 | 2567 | 145 | 2.21 | No |
| Comparative Example 3 | 2736 | 2517 | 219 | 2.09 | No |
| Comparative Example 4 | 2711 | 2538 | 173 | 2.15 | No |
| Comparative Example 5 | 2678 | 2511 | 167 | 2.11 | No |
| Comparative Example 6 | 2690 | 2533 | 157 | 2.11 | No |
| Comparative Example 7 | 2703 | 2503 | 200 | 2.13 | No |

In summary, from Tables 1 and 2, it can be seen that in Examples 1-5, by introducing an appropriate amount of Mn into the diffusion source, the heavy rare earth concentration difference $y_1/y_2$ in the rare earth permanent magnet prepared by the present disclosure was smaller, the uniformity of the magnetic properties of the magnet was improved, the coercivity difference $z_1 - z_2$ between the surface and the core of the magnet was smaller, and the impact toughness (impact absorbing energy) of the magnet was also improved.

It can be seen from Comparative Examples 1 and 5 that since the blackening treatment was not performed before the arrangement of the diffusion source, the reaction of the crystal grains and the grain boundary on the surface of the matrix with the diffusion source was faster, so that the diffusion source entering the interior of the matrix was relatively reduced, thereby slightly reducing the uniformity of the permanent magnet compared with Example 1.

It can be seen from Comparative Examples 1 and 4 that the uniformity of the permanent magnet was slightly reduced by using terbium fluoride as a diffusion source.

It can be seen from Comparative Examples 1 and 4 that when Mn was not contained in the diffusion source or the Mn content was more than 20%, the coercivity difference between the surface layer and the core of the permanent magnet was increased, and the uniformity of the permanent magnet was deteriorated.

It can be seen from Comparative Examples 2, 5, and 6 that since the diffusion source comprised Al element with a lower melting point, the crystal grains on the surface layer of the magnet were excessively reacted with the diffusion source to form a reverse core-shell structure, thereby reducing the coercivity on the surface of the magnet.

It can be seen from Comparative Example 3 that when the diffusion source comprised Ti element with a high melting point, the heavy rare earth was difficult to diffuse into the interior of the magnet effectively, so that the coercivity of the core of the magnet was reduced and the difference between the inside and outside was increased.

In Comparative Example 7, Mn was added to the diffusion matrix material, Mn was uniformly distributed in the permanent magnet, and there was no concentration gradient of Mn in the interior of the permanent magnet, so that the diffusion effect was inferior to that in Example 1 although the diffusion treatment was performed.

The exemplary embodiments of the present disclosure have been described above. However, the protection scope of the present application is not limited to the above embodiments. Any modification, equivalent, improvement and the like made by those skilled in the art without departing from the spirit and principle of the present disclosure shall fall within the protection scope of the present disclosure.

**Claims**

1. A rare earth permanent magnet, comprising a main phase structure of $R_2T_{14}B$ crystal grain, wherein:

   R is a rare earth element;
   T comprises at least Mn, Fe, and optionally a transition metal comprising Co;
   B is boron;
   the permanent magnet further comprises Mn and a heavy rare earth element diffused and distributed in a grain boundary;
   the heavy rare earth element is at least one selected from Dy, Ho, and Tb.

2. The rare earth permanent magnet according to claim 1, wherein R is selected from Nd, and optionally comprises or does not comprise at least one selected from Pr, Dy, Tb, Ho, Ce, and Gd; preferably, the permanent magnet further comprises M;
   preferably, M is at least one selected from aluminum (Al), titanium (Ti), copper (Cu), gallium (Ga), zirconium (Zr), and niobium (Nb).

3. The rare earth permanent magnet according to claim 1 or 2, wherein Mn has a content of x1 at a surface of the permanent magnet, the heavy rare earth has a content of y1 at the surface, Mn has a content of x2 at 500 $\mu$m away from the surface, and the heavy rare earth has a content of y2 at 500 $\mu$m away from the surface, wherein x1 > x2 and y1 > y2;

   preferably, the surface of the permanent magnet has a coercivity of z1, and a core of the permanent magnet has a coercivity of z2, wherein z1 > z2;
   preferably, the permanent magnet has a thickness of m;
   preferably, the permanent magnet has a thickness of m ≤ 15 mm;
   preferably, the permanent magnet satisfies the following formulas (1) and (2):

$$x1 / x2 \geq y1 / y2 \qquad (1)$$

$$[2 * x1 / x2 - (z1 - z2) / 2 / m] \geq 0 \qquad (2) \qquad ;$$

   preferably, the rare earth permanent magnet has an oxygen content below 2000 ppm.

4. The rare earth permanent magnet according to any one of claims 1 to 3, wherein the permanent magnet is obtained by arranging a diffusion source on the surface of a matrix of a neodymium-iron-boron magnet and then performing diffusion heat treatment;

   preferably, the matrix of the neodymium-iron-boron magnet has an oxygen content below 2000 ppm;
   preferably, the diffusion source comprises at least Mn and a heavy rare earth, wherein Mn has a content of no more than 20 %wt, preferably 0.1-20 wt%;
   preferably, the diffusion heat treatment comprises at least a two-stage heat treatment;
   preferably, the heat treatment comprises a first-stage heat treatment followed by a second-stage heat treatment;
   further, the first-stage heat treatment is performed under conditions including: a temperature of 800-1000 °C for at least 3 h;
   further, the second-stage heat treatment is performed under conditions including: a temperature of 400-650 °C for 1-15 h;
   preferably, the matrix of the neodymium-iron-boron magnet can be further subjected to blackening treatment before arranging the diffusion source; further, the blackening treatment conditions are as follows: in the atmosphere, the magnet is blackened at a temperature of 200-500 °C for 3-60 min.

5. A preparation method of the rare earth permanent magnet according to any one of claims 1 to 4, comprising the following steps:

(1) preparing a matrix of a neodymium-iron-boron magnet;
(2) preparing a diffusion source comprising at least Mn and a substance comprising a heavy rare earth element; and
(3) arranging the diffusion source in step (2) on a surface of the matrix, and performing diffusion heat treatment to obtain the rare earth permanent magnet;

preferably, raw materials of the matrix comprise R, Fe, and B, and optionally comprise or do not comprise Co and/or M.

6. The preparation method according to claim 5, wherein the matrix has an oxygen content below 2000 ppm;

preferably, in step (1), a method for preparing the matrix of the neodymium-iron-boron magnet comprises: smelting, milling, pressing, and sintering;
preferably, in step (1), the matrix can be further subjected to blackening treatment; further, the conditions of the blackening treatment are as follows: in the atmosphere, the blackening treatment is performed at a temperature of 200-500 °C for 3-60 min.

7. The preparation method according to claim 5 or 6, wherein in step (2), Mn has a content of 0.01% to 20%, preferably 0.1% to 20%, such as 5%, 10%, or 15%, in the diffusion source;

preferably, in step (2), the substance comprising the heavy rare earth element is selected from pure metals of heavy rare earths and/or compounds of heavy rare earth metals, preferably pure metals of heavy rare earths, in the diffusion source;
preferably, the compound of the heavy rare earth metal is at least one selected from a fluoride of the heavy rare earth, an oxide of the heavy rare earth, a hydride of the heavy rare earth, and an oxy fluoride of the heavy rare earth.

8. The preparation method according to any one of claims 5 to 7, wherein in step (3), the method for arranging comprises arranging the diffusion source to the surface of the matrix, such as at least one selected from thermal spraying, evaporation, coating, magnetron sputtering, burying, printing, and the like.

9. The preparation method according to any one of claims 5 to 8, wherein in step (3), the diffusion heat treatment is performed under vacuum or an inert gas atmosphere;

preferably, in step (3), the diffusion heat treatment comprises at least a two-stage heat treatment; preferably, the diffusion heat treatment comprises a first-stage heat treatment followed by a second-stage heat treatment; further, the first-stage heat treatment is performed under conditions comprising: a temperature of 800-1000 °C for at least 3 h;
further, the second-stage heat treatment is performed under conditions comprising: a temperature of 400-650 °C for 1-10 h.

10. Use of the rare earth permanent magnet according to any one of claims 1 to 4, preferably for a motor.

Europäisches
Patentamt

European
Patent Office

Office européen
des brevets

**EUROPEAN SEARCH REPORT**

Application Number

EP 23 18 3784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/221615 A1 (CHEN GUOAN [CN] ET AL) 3 August 2017 (2017-08-03) * paragraphs [0025], [0058]; examples 1,6 * | 1-10 | INV. H01F1/057 H01F41/02 |
| X | EP 4 002 403 A1 (SHINETSU CHEMICAL CO [JP]) 25 May 2022 (2022-05-25) * paragraphs [0002], [0021], [0032] – [0034]; claim 1 * | 1-10 | |
| X | WO 2021/054077 A1 (SHINETSU CHEMICAL CO [JP]) 25 March 2021 (2021-03-25) * paragraph [0005]; claims 3,4 * | 1-10 | |
| X | EP 2 667 391 A1 (HITACHI METALS LTD [JP]) 27 November 2013 (2013-11-27) * paragraphs [0002], [0042], [0048]; claim 1 * | 1-10 | |
| | | | TECHNICAL FIELDS SEARCHED (IPC) |
| | | | H01F |

The present search report has been drawn up for all claims

| Place of search | Date of completion of the search | Examiner |
|---|---|---|
| Munich | 24 November 2023 | Primus, Jean-Louis |

EPO FORM 1503 03.82 (P04C01)

## ANNEX TO THE EUROPEAN SEARCH REPORT
## ON EUROPEAN PATENT APPLICATION NO.

EP 23 18 3784

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2023

| Patent document cited in search report | | | Publication date | Patent family member(s) | | | Publication date |
|---|---|---|---|---|---|---|---|
| US 2017221615 | | A1 | 03-08-2017 | CN | 105469973 | A | 06-04-2016 |
| | | | | DE | 112015005685 | T5 | 07-09-2017 |
| | | | | JP | 2018504769 | A | 15-02-2018 |
| | | | | US | 2017221615 | A1 | 03-08-2017 |
| | | | | WO | 2016095869 | A1 | 23-06-2016 |
| EP 4002403 | | A1 | 25-05-2022 | CN | 114496438 | A | 13-05-2022 |
| | | | | EP | 4002403 | A1 | 25-05-2022 |
| | | | | JP | 2022077979 | A | 24-05-2022 |
| | | | | KR | 20220064920 | A | 19-05-2022 |
| | | | | US | 2022148801 | A1 | 12-05-2022 |
| WO 2021054077 | | A1 | 25-03-2021 | CN | 114402404 | A | 26-04-2022 |
| | | | | EP | 4032640 | A1 | 27-07-2022 |
| | | | | JP | 7364405 | B2 | 18-10-2023 |
| | | | | JP | 2021048347 | A | 25-03-2021 |
| | | | | KR | 20220066039 | A | 23-05-2022 |
| | | | | US | 2022344080 | A1 | 27-10-2022 |
| | | | | WO | 2021054077 | A1 | 25-03-2021 |
| EP 2667391 | | A1 | 27-11-2013 | CN | 103329224 | A | 25-09-2013 |
| | | | | EP | 2667391 | A1 | 27-11-2013 |
| | | | | JP | 5880448 | B2 | 09-03-2016 |
| | | | | JP | WO2012099186 | A1 | 30-06-2014 |
| | | | | US | 2013299050 | A1 | 14-11-2013 |
| | | | | WO | 2012099186 | A1 | 26-07-2012 |

EPO FORM P0459

For more details about this annex : see Official Journal of the European Patent Office, No. 12/82